# EUROPÄISCHE PATENTANMELDUNG

(11) **EP 3 093 119 A1**
(43) Veröffentlichungstag der Anmeldung: **16.11.2016**
(21) Anmeldenummer: 16000453.7
(22) Anmeldetag: 25.02.2016
(51) Int. Cl.: B29C 47/60, B29C 47/38, B29C 47/40

(54) **EXTRUDERSCHNECKE UND VERFAHREN ZU IHRER UMRÜSTUNG**

(30) Priorität: 10.05.2015 DE 102015005790
(71) Anmelder: Reifenhäuser GmbH & Co. KG Maschinenfabrik, 53844 Troisdorf (DE)
(72) Erfinder: Szurgot, Matheusz, DE - 50677 Köln (DE)
(74) Vertreter: Farago, Peter Andreas

(57) **Zusammenfassung**

Die Erfindung betrifft eine Schnecke zum Einsatz in einem Extruder sowie einen Extruder mit einer solchen Schnecke. Insbesondere betrifft die Erfindung eine Schnecke zum Einsatz in einem Doppelschneckenextruder sowie einen Doppelschneckenextruder.

Üblicherweise werden Schnecken modular aufgebaut. Die modulare Bauweise einer Schnecke führt zu einem stabförmigen Kern, dem sogenannten Dorn, und aus einzelnen Schneckenelementen, die auf den Dorn aufgeschoben werden. Zum Übertragen des hohen auftretenden Drehmoments werden die Elemente mit dem Dorn formschlüssig verbunden und zusätzlich axial verspannt.

Die Erfindung schlägt vor, den Dorn kerbfrei zu gestalten.

Dies führt zu einer deutlichen Erhöhung der Lebensdauer eines solchen Doms und somit auch der verwendeten Schnecke.

## Beschreibung

Die Erfindung betrifft eine Schnecke zum Einsatz in einem Extruder sowie einen Extruder mit einer solchen Schnecke.

Insbesondere betrifft die Erfindung eine Schnecke zum Einsatz in einem Doppelschneckenextruder sowie einen Doppelschneckenextruder.

Üblicherweise werden Schnecken modular aufgebaut. Sie können dadurch sehr flexibel an veränderte Aufgabenstellungen und Produkteigenschaften angepasst werden. Die modulare Bauweise einer Schnecke führt zu einem stabförmigen Kern, dem sogenannten Dorn, in der Praxis auch oft Welle oder Tragwelle genannt, und aus einzelnen Schneckenelementen, die auf den Dorn aufgeschoben werden. Die Elemente erfüllen die klassischen Funktionen der Schnecke im Extrusionsprozess wie beispielsweise das Fördern, Kneten, Mischen oder Scheren des ein- und durchzuführenden Kunststoffs.

Zum Übertragen des hohen auftretenden Drehmoments werden die Elemente mit dem Dorn formschlüssig verbunden und zusätzlich axial verspannt.

Die DE 10 2008 028 289 A1 offenbart eine Schnecke, bei welcher das Drehmoment von Segment zu Segment stirnseitig über eine Verzahnung übergeben wird.

Die DE 103 30 530 A1 beschreibt eine Welle, auf welcher eine Hülse aufgeschweißt wird. Segmente werden bis zum Anschlag aufgefädelt. Die DE 10 2011 112 148 A1, die DE 10 2004 042 846 B4 und die DE 196 21 571 C2 offenbaren jeweils spezielle Verzahnungen zwischen den Schneckensegmenten und dem Dorn.

Der Erfindung liegt die Aufgabe zugrunde, dem Stand der Technik eine Verbesserung oder eine Alternative zur Verfügung zu stellen.

Nach einem ersten Aspekt der vorliegenden Erfindung löst diese Aufgabe eine Schnecke zum Einsatz in einem Extruder, wobei die Schnecke einen Dorn und eine Mehrzahl auf dem Dorn getragene, axial zueinander angeordnete Segmente aufweist, wobei zwischen dem Dorn und einem Segment ein separater Momentenmitnehmer angeordnet ist und wobei der Momentenmitnehmer mit dem Dorn an einer Anlagefläche des Dorns in Anlage ist, wobei sich die Schnecke dadurch kennzeichnet, dass die Anlagefläche des Dorns kerbschwach oder bevorzugt kerbfrei ist.

Begrifflich sei hierzu Folgendes erläutert:
Die "Segmente" sind diejenigen Bauelemente der Schnecke, welche zusammen den schneckenförmigen Gang bzw. die Mehrzahl an schneckenförmigen Gängen zum Plastifizieren des durch den Extruder zu führenden Kunststoffs in Zusammenwirkung mit dem Zylinder des Extruders bewirken, bzw. im Falle eines Doppelschneckenextruders auch mit den Segmenten der zweiten Schnecke.

Jeweils zwei axial benachbarte Segmente stoßen unmittelbar oder mittelbar an ihren Segmentengrenzen axial aneinander. Der sich dazwischen einstellende Schlitz, im einfachsten Fall also ein Kreisring, muss gegen den Durchtritt von Kunststoffschmelze nach innen, somit zum Dorn hin, abgedichtet werden. Die Segmente werden dazu üblicherweise axial verspannt. Die negative Normalkraft führt zu einer ausreichenden Abdichtung.

Der "Momentenmitnehmer" muss zumindest mit einem Segment zusammenwirken. Bei Beaufschlagung der Schnecke mit einem Moment, an einem Segment am Dorn oder an beiden, überträgt der Momentenmitnehmer Moment zumindest zu großem Teil zwischen Segment und Dorn. Zusätzlich kann das Moment von einem Segment an das axial benachbarte zweite Segment weitergegeben werden.

Der Momentenmitnehmer selbst ist dabei weder mit dem ersten noch mit dem zweiten Segment einstückig ausgeführt, sondern ein separates Element der zusammengesetzten Schnecke.

Der Momentenmitnehmer kann aus mehreren Einzelteilen bestehen, oder aus nur einem Teil bestehen.

Generell sei ausdrücklich darauf hingewiesen, dass im Rahmen der hier vorliegenden Patentanmeldung unbestimmte Artikel und Zahlenangaben wie ein, zwei usw. regelmäßig als Mindestens-Angaben zu verstehen sein sollen, also als "mindestens ein...", "mindestens zwei..." usw., sofern sich nicht aus dem jeweiligen Kontext ausdrücklich oder implizit ergibt oder es für den Fachmann offensichtlich ist, dass dort nur "genau ein...", "genau zwei..." usw. gemeint sein kann oder soll. Die " Anlagefläche" des Dorns ist eine Fläche, an welcher der Momentenmitnehmer üblicherweise möglichst großflächig, wobei dies jedoch nicht erforderlich ist, anliegt. Die Anlagefläche ist somit diejenige Fläche, über welche bei Aufbringung eines Moments, somit bei einer Drehung des Dorns gegenüber dem Schneckenzylinder, die erforderliche ausmittige Kraft, somit das erforderliche Moment, zum Mitdrehen der Segmente auf die Segmente übertragen wird, somit der trägen Kraft der im Betrieb im Extruder befindlichen Schmelze eine ausreichende Kraft zum Mobilisieren entgegengesetzt wird.

Vereinfacht lässt sich in den meisten Fällen voraussichtlich sagen, dass bei einer Betrachtung der Schnecke im Querschnitt zumindest eine Aussparung zwischen dem Querschnitt des Dorns und dem Querschnitt der radial inneren Öffnung der Segmente vorhanden sein wird. Dies ist genau diejenige Aussparung, in welche der Momentenmitnehmer zum Herstellen einer funktionsfähigen Schnecke eingepasst sein muss.

Ausdrücklich sei darauf hingewiesen, dass es nicht zwingend zu einer vollflächigen "Anlage" kommen muss. Vielmehr reicht es auch aus, wenn eine Mehrzahl, bevorzugt eine Vielzahl, von diskreten punkt- oder linienförmigen Kontakten zwischen dem Dorn und dem Momentenmitnehmer vorliegt. So ist es denkbar, dass an der Anlagefläche kleinere Kerben vorhanden sind. Generell sei jedoch darauf hinzuweisen, dass die dynamischen Belastungen sowohl auf den Dorn als auch auf den Momentenmitnehmer geringer sind, je flächiger der Momentenmitnehmer mit dem Dorn an dessen Anlagefläche in Anlage ist und/oder je mehr sich die Anlagefläche dem Ideal der völligen Kerbfreiheit annähert.

Der vorgestellte erste Aspekt der Erfindung sieht bei einer bis dahin aus dem Stand der Technik bekannten Schnecke nun vor, dass die Anlagefläche des Dorns kerbfrei ist. Mit anderen Worten ist also der Dorn im Querschnitt an der Anlagefläche frei von Kerben.

Relevant für die Auslegung ist der Ingenieur, nicht etwa ein Physiker. Kleinere Kerben sollen also immer noch unter den Begriff der Kerbfreiheit fallen, sofern der Ingenieur die Auffassung vertritt, dass die Kerbfreiheit zumindest im Wesentlichen vorliegt.

Mechanisch führt dies zu einer geringeren Belastung als im Stand der Technik bekannt.

Im Stand der Technik sind üblicherweise Passfedern als Momentenmitnehmer zwischen dem Dorn und den Segmenten vorgesehen. Unabhängig von der konkreten Ausgestaltung der Momentenmitnehmer im Stand der Technik tritt jedoch generell an eingeschnittenen oder gekerbten Körpern eine Kerbwirkung auf, wenn die Körper auf Zug, Scherung oder Torsion belastet werden. Die Kerbwirkung setzt sich auf zwei Mechanismen zusammen, nämlich einerseits aus einer örtlichen Spannungskonzentration, welche sich durch eine Formzahl beschreiben lässt, andererseits aus einer Stützwirkung, welche beschreibt, dass der Werkstoff und das konkrete Abklingverhalten der Spannungskonzentration den Spannungsspitzen an der Kerbe entgegenwirken. Die Kerbwirkungszahl ist der Quotient aus Formzahl und Stützziffer.

Weitere Angaben hierzu finden sich in der DIN 743-2: Tragfähigkeitsberechnung von Wellen und Achsen - Teil 2: Formzahlen und Kerbwirkungszahlen.

Während die bei der Konstruktion von Extruderschnecken bislang verwendeten Geometrien die Kerbung am Dorn bewusst in Kauf genommen haben, um eine sichere formschlüssige Verbindung zu erzielen, geht die hier vorgestellte Erfindung bewusst den entgegengesetzten Weg und strebt eine möglichst geringe Formzahl an.

Die Erfindung trägt deshalb dafür Sorge, dass der Querschnitt des Dorns zumindest dort, wo üblicherweise zwingend eine Kerbe vorhanden war, nämlich an der Anlagefläche, nun gerade keine Kerbe mehr vorliegt. Unter einer "Kerbe" sei in dieser Hinsicht zumindest ein konkaver Verlauf des Querschnitts innerhalb der Anlagefläche verstanden. Ein solcher soll hier vermieden werden, jedenfalls mit einer Ecke im Querschnitt.

Durch die Kerbarmut, insbesondere Kerbfreiheit, des Dorns an der Anlagefläche, somit zumindest innerhalb der Anlagefläche, bevorzugt jedoch auch an den Grenzen der Anlagefläche, reduzieren sich die Spannungsspitzen, die im Betrieb der Schnecke auf den Dorn wirken, ganz erheblich. Es ist somit beispielsweise möglich, den Dorn mit den bisher bekannten Werkstoffen auszuführen, was zu einer deutlich höheren Lebensdauer des Dorns führen wird; oder es ist möglich, den Dorn aus einem anderen Werkstoff herzustellen, wobei der Werkstoff auf die nun neue vorherrschende Belastung besser ausgelegt werden kann.

Die Erfindung führt somit wahlweise zu einer Lebensdauerverlängerung oder zu einer Kosteneinsparung, oder zu beidem. Auch eine Leistungssteigerung der Maschine kann erreicht werden.

Nach einem zweiten Aspekt der Erfindung löst die gestellte Aufgabe eine Schnecke zum Einsatz in einem Extruder, wobei die Schnecke einen Dom und eine Mehrzahl auf dem Dorn getragene, axial zueinander angeordnete Segmente aufweist, wobei zwischen dem Dorn und einem Segment ein separater Momentenmitnehmer angeordnet ist und wobei der Momentenmitnehmer mit dem Dorn an einer Anlagefläche des Dorns in Anlage ist, wobei der Dorn einen Querschnitt aufweist, welcher senkrecht zu einer Längserstreckungsachse der Schnecke liegt und welcher die Anlagefläche schneidet, wobei der Dorn am Querschnitt eine Formzahl (nach DIN 743-2 Abschnitt 5) von unter 2,0 aufweist. Bevorzugt ist vorgesehen, dass der Dorn am Querschnitt eine Formzahl von unter 1,75 aufweist, bevorzugt von unter 1,5, besonders bevorzugt von höchstens 1,4, höchstens 1,3 oder höchstens 1,25.

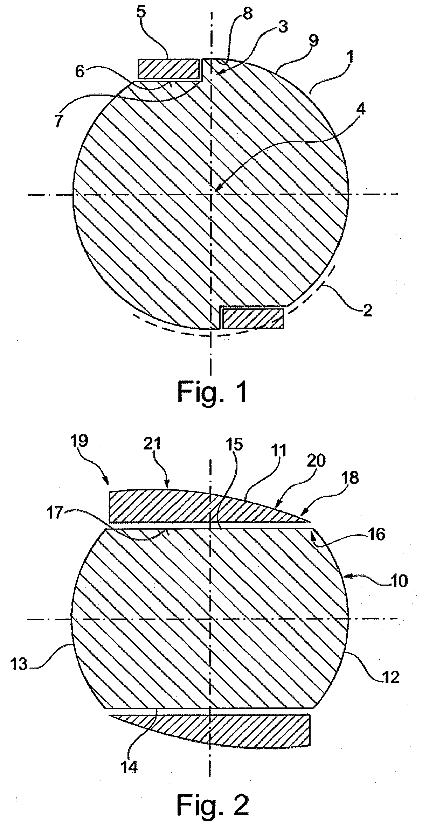

Prototypenberechnungen des Erfinders haben für Dorngeometrien nach dem Stand der Technik (hier konkret: nach Figur 1) eine die Gekerbtheit kennzeichnende Formzahl α (alpha) von 2,21 bis 2,39 ergeben. Eine erfindungsgemäße beispielhafte Ausgestaltung hat demgegenüber eine Formzahl alpha von etwa 1,19 bis 1,34.

Nach einem dritten Aspekt der hier vorliegenden Erfindung löst die gestellte Aufgabe eine Schnecke zum Einsatz in einem Extruder, wobei die Schnecke einen Dorn und eine Mehrzahl auf dem Dorn getragene, axial zueinander angeordnete Segmente aufweist, wobei zwischen dem Dorn und einem Segment ein separater Momentenmitnehmer angeordnet ist und wobei der Momentenmitnehmer mit dem Dorn an einer Anlagefläche des Dorns in Anlage ist, wobei die Anlagefläche auf ihrem Verlauf im Querschnitt des Dorns gegenüber einer kreisrunden Umgebenden mit einem ersten, positiven Winkel abzuweichen beginnt, wobei der erste Winkel unter 90 ° beträgt, und mit einem zweiten, ebenfalls positiven Winkel wieder in die Umgebende einläuft, wobei eine Summe der negativen Winkel im Betrag unter 90 ° beträgt, vor allem unter 45 °. Vor allem kann die Summe der negativen Winkel im Betrag unter 10 ° betragen, insbesondere 0 °.

Beispielsweise beträgt die Summe der negativen Winkel bei der Geometrie nach Figur 1 90 °, nämlich genau die - 90 ° der Kante in der Hohlkehle der Anlagefläche. Die beiden positiven Winkel in dieser Ausführung betragen: erster Winkel etwa 30 °, zweiter Winkel genau 90 °.

Hingegen beträgt die Summe der negativen Winkel bei der Geometrie nach Figur 2 Null. Die beiden positiven Winkel betragen jeweils etwa 45 °.

Nach einem vierten Aspekt der Erfindung löst die gestellte Aufgabe eine Schnecke zum Einsatz in einem Extruder, wobei die Schnecke einen Dorn und eine Mehrzahl auf dem Dorn getragene, axial zueinander angeordnete Segmente aufweist, wobei zwischen dem Dorn und einem Segment ein separater Momentenmitnehmer angeordnet ist und wobei der Momentenmitnehmer mit dem Dorn an einer Anlagefläche des Dorns in Anlage ist, wobei der Momentenmitnehmer genau mit einer Seite seiner Kontur an der Anlagefläche anliegt.

Demgegenüber ist im Stand der Technik nur die Verwendung von Passfedern bekannt, die entweder mit zwei Seiten (vgl. Figur 1) oder mit drei Seiten an der Anlagefläche anliegen.

Generell wird es das einfachste sein, dass der Dorn im Querschnitt mit einer kreisrunden Umgebenden teilkongruent ist. Der Dorn kann dann aus einer Welle mit kreisrundem Querschnitt spanend gearbeitet werden, vor allem gefräst werden.

Der Dorn ist eine Welle, deren Querschnitt vom Kreisrunden abweicht, und zwar üblicherweise nach innen hin von einer theoretischen kreisrunden Umgebenden abweicht. Die Herstellung ist beispielsweise dadurch möglich, dass eine Welle mit ursprünglich kreisrundem Querschnitt im Querschnitt nachbearbeitet wird, indem Material abgetragen wird. Auch unabhängig von der Herstellungsweise des hier vorgeschlagenen Doms wird es eine besonders leichte Herstellung dann sein, wenn derjenige Anteil des Umfangs des Dorns im Querschnitt über möglichst große Bereiche kreisrund ist, also der Dorn im Querschnitt mit seiner theoretischen kreisrunden Umgebenden über möglichst große Bereiche teilkongruent ist, beispielsweise über mindestens die Hälfte seines konkreten, gemessenen kontrollierten Umfangs.

Tendenziell wird der Anteil des Umfangs, der mit der kreisrunden Umgebenden kongruent ist, kleiner werden, je mehr Anlageflächen mit Momentenmitnehmern vorgesehen sind.

Wenn die Anlagefläche gegenüber der Umgebenden mit stumpfen Winkeln abweicht, dann hilft bereits dies, die Spannungsspitzen im Dorn zu mindern.

Als ein "stumpfer Winkel" sei ein Winkel verstanden, der größer als π/2 ist, aber kleiner als π, bei DEG-Winkeln somit größer als 90°, jedoch kleiner als 180°.

Das Merkmal sei so verstanden, dass die Anlagefläche gegenüber der Umgebenden ausschließlich mit stumpfen Winkeln abweicht, wenn der Übergang von der theoretischen kreisrunden Umgebenden des Dorns in die Anlagefläche hinein im Querschnitt betrachtet wird.

Bei Berechnungen des Erfinders hat sich eine Dorngeometrie als sehr vielversprechend herausgestellt, bei welcher die Anlagefläche eine Sehne zwischen zwei Kreisbogenstücken an einem Querschnitt des Dorns ist.

Die "Sehne" ist mathematisch-geometrisch die kürzeste Verbindung im Querschnitt zwischen zwei Enden von Kreisbogenstücken. Es sei jedoch darauf hingewiesen, dass nicht zwingend eine mathematisch ideale Sehne vorliegen muss. Vielmehr wird der Fachmann, ein Ingenieur des Maschinenbaus, erkennen, dass auch geringfügige Abweichungen von einer direkten, geraden Sehne immer noch den Erfindungsaspekt ausreichend erfüllen können.

Die beiden Kreisbogenstücke, zwischen welche die Sehne geschlagen sein soll und dadurch die Anlagefläche bilden soll, können voneinander getrennt sein, so dass zwischen den Kreisbogenstücken am Querschnitt des Dorns zumindest noch eine weitere Abweichung von der Kreisbogenform vorliegt. Es kann aber auch ein im Übrigen durchlaufender Kreisbogen der kreisrunden Umgebenden am betrachteten Querschnitt vorhanden sein, wobei nur die eine Sehne im Querschnitt vorliegt, so dass nur ein Momentenmitnehmer an diesem betrachteten Querschnitt zwischen dem Dorn und mindestens einem dort vorhandenen Segment eingepasst werden kann.

Um die Belastungen möglichst gleichmäßig im Dorn zu verteilen, wird vorgeschlagen, dass der Dorn im Querschnitt spiegelsymmetrisch ist, insbesondere doppelt spiegelsymmetrisch.

Es wurde bereits darauf hingewiesen, dass über einen Umfang des Dorns eine Mehrzahl Momentenmitnehmer an einem Querschnitt vorhanden sein kann. Auch dies führt zu einer reduzierten Belastung der Spannungen im Dorn, weil das insgesamt erforderliche Drehmoment über mehrere diskrete Verbindungen, nämlich die mehreren Momentenmitnehmer am betrachteten Querschnitt, in den Querschnitt des Dorns eingeleitet wird. An jeder einzelnen Anlagefläche für jeden einzelnen Momentenmitnehmer reduziert sich daher die maximal zu erwartende Flächenpressung, auch wenn dabei die Torsionsspannung zunehmen kann.

Der Momentenmitnehmer kann im Querschnitt eine Keilform aufweisen, wobei der Keil im Detail die verschiedensten Ausgestaltungen annehmen kann, also mit zumindest einer Kante teilrund oder anders, wobei jedenfalls ein erstes flaches Ende und einem gegenüber der Flachheit des einen Endes erhöhten anderen Ende vorliegen soll. Der Keil ist dann im Querschnitt der Schnecke nicht mehr spiegelsymmetrisch, was bei einer geeigneten Gegengestaltung der Schneckensegmente zur Innenseite hin zwingend zu einer Momentenmitnahme führt.

Bevorzugt sind jedoch verschiedene Momentenmitnehmer an einem Querschnitt der Schnecke vorhanden und sind punktsymmetrisch in Bezug auf die Mittelachse der Schnecke, dabei jedoch nicht spiegelsymmetrisch, sondern hinsichtlich theoretischer Spiegelachsen asymmetrisch. Eine Asymmetrie lässt es besonders leicht werden, eine Momentenmitnahme zwischen dem Dorn und den Segmenten zu erzwingen. Eine Punktsymmetrie lässt sich die Spannungen im Dorn möglichst gleichmäßig verteilen.

Es lassen sich auch Konstruktionen denken, bei denen ein oder mehrere Momentenmitnehmer spiegelsymmetrisch zueinander stehen.

Ebenso sind Konstellationen denkbar, bei denen die vorstehenden Merkmale zur Symmetrie zwar bei einer Mehrzahl Momentenmitnehmer an einem Querschnitt vorhanden sind, aber nicht bei allen. Beispielsweise können einer oder mehrere der Momentenmitnehmer zur Mitnahme in entgegengesetzter Drehrichtung eingerichtet sein.

Nach einem zweiten Aspekt der vorliegenden Erfindung löst die gestellte Aufgabe ein Verfahren zum Umrüsten einer Schnecke eines Extruders, wobei die Schnecke einen Dorn und eine Mehrzahl auf dem Dorn getragene, axial angeordnete Segmente mit abgedichteten Segmentengrenzen aufweist, wobei zwischen dem Dorn und einem Segment ein separater Momentenmitnehmer angeordnet ist, wobei der Momentenmitnehmer mit dem Dorn an einer Anlagefläche des Dorns in Anlage ist, wobei das Verfahren die folgenden Schritte aufweist: (a) Abnehmen der Segmente vom Dorn, beispielsweise über ein axiales Hinunterschieben der Segmente vom Dorn; und (b) Aufschieben der Segmente auf einen Dorn mit Momentenmitnehmern, wobei die Momentenmitnehmer mit dem Dorn an einer Anlagefläche des Dorns in Anlage sind und wobei die Anlagefläche des Doms kerbfrei ist.

Der vorgestellte zweite Aspekt der Erfindung hat erkannt, dass selbst bei Verwendung eines kerbfreien oder zumindest an der Anlagefläche kerbfreien Dorns die aus dem Stand der Technik bekannten Segmente weiterverwendet werden können, wenn nur die Momentenmitnehmer geometrisch angepasst sind, beispielsweise die Passfedern entsprechend angepasst sind.

Es versteht sich, dass die vorgestellten Vorteile der Erfindung sich auch auf einen Extruder, insbesondere einen Einschneckenextruder oder einen Doppelschneckenextruder, ohne weiteres erstrecken, wenn dieser eine Schnecke wie vorstehend beschrieben aufweist.

Die Erfindung wird nachstehend anhand eines Ausführungsbeispiels im Vergleich zu einer Ausführung gemäß dem Stand der Technik unter Bezugnahme auf die Zeichnung näher erläutert. In der Zeichnung zeigen
- Fig. 1: schematisch in einem Querschnitt einen Dorn mit zwei Passfedern, nach dem Stand der Technik, sowie
- Fig. 2: in analoger Ansicht einen beispielhaften erfindungsgemäßen Aufbau eines Dorns mit zwei Momentenmitnehmern an jeweils einer kerbfreien Anlagefläche

Der Dorn 1 gemäß dem Stand der Technik, dargestellt in Figur 1, besteht im Wesentlichen aus einem überwiegend zylindrischen Vollmaterial. Im Querschnitt ist der Dorn 1 aus dem Stand der Technik daher mit einer theoretischen kreisrunden Umgebenden 2 (zur besseren Erkennbarkeit mit leichtem Abstand skizziert) kongruent. Es sind jedoch zwei Passfedernuten 3 (exemplarisch beziffert) über den Umfang des Dorns 1 aus dem Stand der Technik verteilt angebracht, so dass der Dorn 1 aus dem Stand der Technik im Querschnitt punktsymmetrisch bezüglich einer Schneckenachse 4 ist.

In jeder Passfedernut 3 ist eine herkömmliche Passfeder 5 eingesetzt. Diese ragt über die kreisrunde Umgebende 2 des Dorns 1 aus dem Stand der Technik radial nach außen hinaus, wo sie bei zusammengesetzter Schnecke (nicht dargestellt) mit dem Inneren der Segmente (nicht dargestellt) formschlüssig zusammenwirkt und für eine Momentenmitnahme sorgt.

Die Passfeder 5 liegt in der Passfedernut 3 an einer kerbbehafteten Anlagefläche 6 an: So besteht der Querschnitt des Dorns 1 aus dem Stand der Technik in der kerbbehafteten Anlagefläche 6 aus zwei im Wesentlichen geraden Verläufen, die jedoch zwischen sich eine konkave Kehle 7 aufweisen. Jedenfalls dort kommt es zu hohen Spannungsspitzen infolge der Kerbwirkung. Außerdem ist ein rechter Winkel 8 einseitig an einem Übergang von einem Kreisbogenstück 9 in die kerbbehaftete Anlagefläche 6 hinein vorhanden, was ebenfalls zu einer unerwünscht hohen Spannungskonzentration führen wird.

Die dem gegenüberstehende erfindungsgemäße Ausführungsform (vgl. Fig. 2) besteht ebenfalls aus einem Dorn, jedoch aus einem kerbfreien Dorn 10, und zwei keilförmigen Passfedern 11 (exemplarisch beziffert).

Der kerbfreie Dorn 10 - streng genommen: der Dorn mit kerbfreien Anlageflächen - weist eine bestimmte Anzahl Kreisbogenstücke 12, 13, hier genau zwei Kreisbogenstücke 12, 13 auf, sowie zwei, hier genau zwei, dazwischenliegende Sehnen 14, 15.

Der kerbfreie Dorn 10 ist daher doppelt achssymmetrisch.

Zudem weist der kerbfreie Dorn 10 weder einen konkaven Bereich noch einen rechten oder spitzeren Winkel auf. Vielmehr besteht er lediglich aus den beiden Kreisbogenstücken 12, 13, den beiden exakt gerade verlaufenden Sehnen 14, 15 und den dazwischenliegenden stumpfwinkligen Übergängen 16 (exemplarisch beziffert).

Die beiden Sehnen 14, 15 dienen den beiden keilförmigen Passfedern 11 als kerbfreie Anlageflächen 17 (exemplarisch beziffert).

Wie aus dem Stand der Technik bekannt, benötigt der kerbfreie Dorn 10 Passfedern für einen formschlüssigen Übergang eines Moments vom Dorn auf die Schneckensegmente.

Dafür sorgen die beiden keilförmigen Passfedern 11.

Jede keilförmige Passfeder 11 weist ein flaches erstes Ende 18 sowie ein erhöhtes zweites Ende 19 auf.

In einem ersten Außenkonturverlauf 20 verläuft das flache erste Ende 18 der keilförmigen Passfedern 11 bevorzugt kreisbogenförmig, nämlich in Fortsetzung der theoretischen kreisrunden Umgebenden (hier nicht dargestellt), mit welcher die Kreisbogenstücke 12, 13 kongruent liegen. Erst in einem weiteren, zweiten Außenkonturverlauf 21 verlaufen die keilförmigen Passfedern 11 im Querschnitt nach außen aus der kreisrunden Umgebenden hinaus und sorgen dort für die Momentenmitnahme gegenüber den Segmenten.

Der kerb freie Dorn 10 der erfindungsgemäßen Ausführung einer Schnecke ist nicht nur deutlich standsicherer als der Dorn 1 gemäß dem Stand der Technik; er lässt sich auch viel leichter und kostengünstiger beschaffen. Außerdem ist bei geschickter Wahl der Geometrie der keilförmigen Passfedern 11 sogar weiter eine Außenkontur der Gesamtkonstruktion aus dem kerbfreien Dorn 10 und den keilförmigen Passfedern 11 erreichbar, die mit der gesamten Außenkontur des Dorns 1 aus dem Stand der Technik mit den Passfedern 5 identisch ist oder zumindest weitgehend identisch ist. Es lassen sich daher schon vorhandene Schneckensegmente auch mit dem neuen, erfindungsgemäßen kerbfreien Dorn 10 und dessen keilförmigen Passfedern 11 verwenden.

Es sei ausdrücklich darauf hingewiesen, dass an einem Querschnitt die Momentenmitnehmer auch für gegenläufige Drehrichtungen mitnehmend gestaltet bzw. angeordnet sein können. So sieht eine beispielhafte Ausführungsform vier Momentenmitnehmer vor, die bevorzugt im Querschnitt identisch sind, aber die andersherum liegend angeordnet sind, sodass sie für beide Momentendrehrichtungen als Mitnehmer ausgebildet sind.

### Liste der verwendeten Bezugszeichen

- 1: Dorn gemäß dem Stand der Technik
- 2: kreisrunde Umgebende
- 3: Passfedernut
- 4: Schneckenachse
- 5: Passfeder
- 6: kerbbehaftete Anlagefläche
- 7: konkave Kehle
- 8: rechter Winkel
- 9: Kreisbogenstück
- 10: kerbfreier Dorn
- 11: keilförmige Passfeder
- 12: Kreisbogenstück
- 13: Kreisbogenstück
- 14: Sehne
- 15: Sehne
- 16: stumpfwinkliger Übergang
- 17: kerbfreie Anlagefläche
- 18: flaches erstes Ende
- 19: erhöhtes zweites Ende
- 20: erster Außenkonturverlauf
- 21: zweiter Außenkonturverlauf

## Patentansprüche

1. Schnecke zum Einsatz in einem Extruder, wobei die Schnecke einen Dorn und eine Mehrzahl auf dem Dorn getragene, axial zueinander angeordnete Segmente aufweist, wobei zwischen dem Dorn und einem Segment ein separater Momentenmitnehmer angeordnet ist und wobei der Momentenmitnehmer mit dem Dorn an einer Anlagefläche des Dorns in Anlage ist, ***dadurch gekennzeichnet, dass*** die Anlagefläche des Dorns kerbfrei ist.

2. Schnecke zum Einsatz in einem Extruder, wobei die Schnecke einen Dorn und eine Mehrzahl auf dem Dorn getragene, axial zueinander angeordnete Segmente aufweist, wobei zwischen dem Dorn und einem Segment ein separater Momentenmitnehmer angeordnet ist und wobei der Momentenmitnehmer mit dem Dorn an einer Anlagefläche des Dorns in Anlage ist, wobei der Dorn einen Querschnitt aufweist, welcher senkrecht zu einer Längserstreckungsachse der Schnecke liegt und welcher die Anlagefläche schneidet, ***dadurch gekennzeichnet*, *dass*** der Dorn am Querschnitt eine Formzahl (nach DIN 743-2 Abschnitt 5) von unter 2,0 aufweist.

3. Schnecke nach Anspruch 2, ***dadurch gekennzeichnet*, *dass*** der Dorn am Querschnitt eine Formzahl von unter 1,75 aufweist, bevorzugt von unter 1,5, besonders bevorzugt von höchstens 1,4, höchstens 1,3 oder höchstens 1,25.

4. Schnecke zum Einsatz in einem Extruder, wobei die Schnecke einen Dorn und eine Mehrzahl auf dem Dorn getragene, axial zueinander angeordnete Segmente aufweist, wobei zwischen dem Dorn und einem Segment ein separater Momentenmitnehmer angeordnet ist und wobei der Momentenmitnehmer mit dem Dorn an einer Anlagefläche des Dorns in Anlage ist, wobei die Anlagefläche auf ihrem Verlauf im Querschnitt des Dorns gegenüber einer kreisrunden Umgebenden mit einem ersten, positiven Winkel abzuweichen beginnt und mit einem zweiten, ebenfalls positiven Winkel wieder in die Umgebende einläuft, ***dadurch gekennzeichnet, dass*** eine Summe der negativen Winkel im Betrag unter 90 ° beträgt, vor allem unter 45 °.

5. Schnecke nach Anspruch 4, ***dadurch gekennzeichnet*, *dass*** die Summe der negativen Winkel im Betrag unter 10 ° beträgt, insbesondere 0 °.

6. Schnecke zum Einsatz in einem Extruder, wobei die Schnecke einen Dorn und eine Mehrzahl auf dem Dorn getragene, axial zueinander angeordnete Segmente aufweist, wobei zwischen dem Dorn und einem Segment ein separater Momentenmitnehmer angeordnet ist und wobei der Momentenmitnehmer mit dem Dorn an einer Anlagefläche des Dorns in Anlage ist, ***dadurch gekennzeichnet*, *dass*** der Momentenmitnehmer genau mit einer Seite seiner Kontur an der Anlagefläche anliegt.

7. Schnecke nach zwei, drei, vier, fünf oder sechs der vorstehenden Ansprüche.

8. Schnecke nach einem der vorstehenden Ansprüche, ***dadurch gekennzeichnet*, *dass*** der Dorn im Querschnitt mit einer kreisrunden Umgebenden teilkongruent ist.

9. Schnecke nach einem der vorstehenden Ansprüche, ***dadurch gekennzeichnet*, *dass*** die Anlagefläche - zumindest zum Teil - eine Sehne zwischen zwei Kreisbogenstücken an einem Querschnitt des Dorns ist.

10. Schnecke nach einem der vorstehenden Ansprüche, ***dadurch gekennzeichnet*, *dass*** der Dorn im Querschnitt spiegelsymmetrisch ist, insbesondere doppelt spiegelsymmetrisch.

11. Schnecke nach einem der vorstehenden Ansprüche, ***dadurch gekennzeichnet*, *dass*** über einen Umfang des Dorns eine Mehrzahl Momentenmitnehmer vorgesehen ist.

12. Schnecke nach einem der vorstehenden Ansprüche, ***dadurch gekennzeichnet*, *dass*** ein Momentenmitnehmer im Querschnitt eine Keilform aufweist, mit einem flachen einen Ende und einem erhöhten anderen Ende.

13. Schnecke nach einem der vorstehenden Ansprüche, ***dadurch gekennzeichnet*, *dass*** die Momentenmitnehmer an einem Querschnitt der Schnecke asymmetrisch, punktsymmetrisch oder spiegelsymmetrisch sind.

14. Verfahren zum Umrüsten einer Schnecke eines Extruders, wobei die Schnecke einen Dorn und eine Mehrzahl auf dem Dorn getragene, axial zueinander angeordnete Segmente mit abgedichteten Segmentengrenzen aufweist, wobei zwischen dem Dorn und einem Segment ein separater Momentenmitnehmer angeordnet ist, wobei der Momentenmitnehmer mit dem Dorn an einer Anlagefläche des Dorns in Anlage ist, mit den Schritten
a. Abnehmen der Segmente vom Dorn;
b. Aufschieben der Segmente auf einen Dorn mit Momentenmitnehmern, wobei die Momentenmitnehmer mit dem Dorn an einer Anlagefläche des Dorns in Anlage sind und wobei eine Schnecke nach einem der Ansprüche 1 bis 13 erstellt wird.

15. Extruder, insbesondere Einschneckenextruder oder Doppelschneckenextruder, mit einer Schnecke nach einem der Ansprüche 1 bis 13.
